# EUROPEAN PATENT APPLICATION

(11) **EP 0 680 244 A2**
(43) Date of publication of application: **02.11.1995**
(21) Application number: 95104125.0
(22) Date of filing: 21.03.1995
(51) Int. Cl.: H05B 33/14, C09K 11/84, C09K 11/79, C09K 11/67

(54) **Thin film light emitting element**

(30) Priority: 24.03.1994 JP 52392/94
(71) Applicant: FUJI ELECTRIC CO. LTD., Kawasaki 210 (JP)
(72) Inventor: Yamada, Yoji, c/o Fuji Electric Co., Ltd., Kawasaki 210 (JP)
(74) Representative: May, Hans Ulrich, Dr.

(57) **Abstract**

[Object]
To provide a thin film light emitting element which emits white light of high colour purity.

[Configuration]
A blue-light emitting layer 17 is laminated on a zinc sulphide light emitting layer 14. The blue-light emitting layer 17 is comprised of di-yttrium dioxide monosulfide Y₂O₂S containing doped thulium Tm as light emitting centers; di-lanthanum dioxide monosulfide La₂O₂S containing doped thulium Tm as light emitting centers; zinc orthosilicate Zn₂SiO₄ containing doped titanium Ti as light emitting centers; zinc orthosilicate Zn₂SiO₄ containing doped thulium Tm as light emitting centers; zinc orthosilicate Zn₂SiO₄ containing doped cerium Ce as light emitting centers; or di-yttrium silicon pentoxide Y₂SiO₅ containing doped cerium Ce as light emitting centers.

## Description

The present invention relates to a thin film light emitting element which emits excellent white light, and more specifically, the present invention relates to a blue-light emitting material used in a blue-light emitting layer of the thin film light emitting element.

### [Prior Art]

Dual insulation type thin film electroluminescent display elements (hereinafter referred to as "light emitting element"), comprised of a light emitting layer sandwiched between a transparent electrode ITO and a back electrode through insulation layers, and Mn light emitting centers doped in the light emitting layer, have attracted much attention due to high luminance, high resolution, and large display capacity as useful constituent elements of thin display panels.

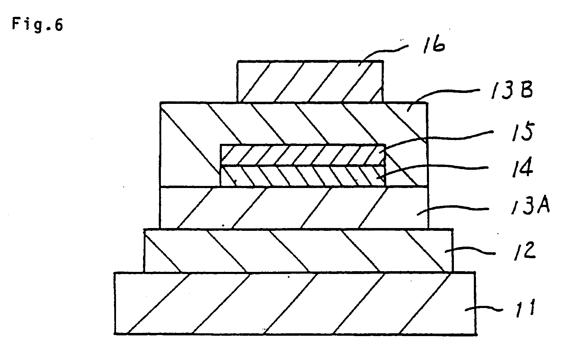

Figure 6 shows a sectional view of a dual insulation type thin film light emitting element according to the prior art.

The thin film light emitting element is comprised of a glass base plate 11, a transparent electrode 12, the first insulation layer 13A comprised of alumina Al₂O₃, silica SiO₂ , silicon nitride Si₃N₄ , etc., a zinc sulfide light emitting layer 14, a strontium sulfide light emitting layer 15, the second insulation layer 13B comprised of the same material of the first insulation layer, and an aluminum back electrode 16 arranged in parallel and orthogonally to the transparent electrode 12. Thickness of each layer is set at 20 to 1000 nm. The transparent electrode 12, the first insulation layer 13A and the second insulation layer 13B are deposited by the sputtering method. The Zinc sulfide light emitting layer 14 and the strontium sulfide light emitting layer 15 are deposited by the sputtering method or the electron beam deposition method.

The zinc sulfide light emitting layer 14 is comprised of a zinc sulfide ZnS matrix into which a small amount of Mn or TbOF is doped to form light emitting centers. In the strontium sulfide light emitting layer 15, cerium Ce is doped into a strontium sulfide SrS matrix. The light emitting layer 14 and 15 are deposited under their concentrations of the light emitting centers maintained at an optimum value, for example 0.4 to 0.6 wt% for Mn in ZnS and 0.3 mol% in SrS. Then, the deposited light emitting layers are heat treated so as to improve their crystallinity and disperse the light emitting centers.

### [Problems to be solved by the Invention]

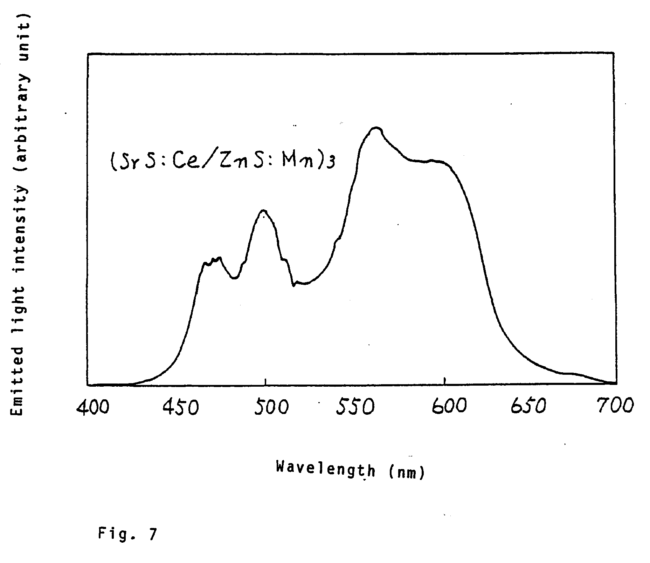

Figure 7 is a graph showing an emission spectrum of a pair of zinc sulfide and strontium sulfide light emitting layers. The zinc sulfide light emitting layer is comprised of zinc sulfide into which manganese is doped (ZnS:Mn). And, the strontium sulfide light emitting layer is comprised of strontium sulfide into which cerium is doped (SrS:Ce).

Red and green components of an emission spectrum of Fig. 7 are obtained from the zinc sulfide layer. The emitted light from the strontium sulfide layer includes a weak blue component, though the strontium sulfide layer is intended for a blue-light emitting layer. Because of the shortage of blue light intensity, the above described element (SrS: Ce/ZnS:Mn) in over all emits yellowish white light, and is inferior to cathode ray tubes (CRTs) in obtaining pure white light.

In view of the foregoing, an object of the present invention is to provide a thin film light emitting element which uses new blue light emitting material in its blue-light emitting layer for intensifying blue light emission and facilitates obtaining excellent white light.

### [Means for solving the Problem]

The object of the present invention is achieved by an inorganic thin film light emitting element, which is comprised of a supporting means, further comprised of a glass base plate, for supporting the light emitting element; a transparent electrode laminated on the glass base plate; the first inorganic insulation layer laminated on the transparent electrode; a zinc sulfide light emitting layer, laminated on the first insulation layer, further comprised of doped light emitting centers; a blue-light emitting layer laminated on the zinc sulfide light emitting layer, further comprised of di-yttrium dioxide monosulfide Y₂O₂S containing doped thulium Tm as light emitting centers; the second inorganic insulation layer laminated on the blue-light emitting layer; and a back electrode laminated on the second insulation layer, in which thin film light emitting element, the zinc sulfide light emitting layer and the blue-light emitting layer being excited to emit light by electrons migrating, under voltage applied between the transparent electrode and the back electrode, through a boundary between the first insulation layer and the zinc sulfide light emitting layer and a boundary between the blue-light emitting layer and the second insulation layer.

The object of the present invention is achieved by an inorganic thin film light emitting element, which is comprised of a supporting means, further comprised of a glass base plate, for supporting the light emitting element; a transparent electrode laminated on the glass base plate; the first inorganic insulation layer laminated on the transparent electrode; a zinc sulfide light emitting layer, laminated on the first insulation layer, further comprised of doped light emitting centers; a blue-light emitting layer laminated on the zinc sulfide light emitting layer, further comprised of di-lanthanum dioxide monosulfide La₂O₂S containing doped thulium Tm as light emitting centers; the second inorganic insulation layer laminated on the blue-light emitting layer; and a back electrode laminated on the second insulation layer, in which thin film light emitting element, the zinc sulfide light emitting layer and the blue-light emitting layer being excited to emit light by electrons migrating, under voltage applied between the transparent electrode and the back electrode, through a boundary between the first insulation layer and the zinc sulfide light emitting layer and a boundary between the blue-light emitting layer and the second insulation layer.

The object of the present invention is achieved by an inorganic thin film light emitting element, which is comprised of a supporting means, further comprised of a glass base plate, for supporting the light emitting element; a transparent electrode laminated on the glass base plate; the first inorganic insulation layer laminated on the transparent electrode; a zinc sulfide light emitting layer, laminated on the first insulation layer, further comprised of doped light emitting centers; a blue-light emitting layer laminated on the zinc sulfide light emitting layer, further comprised of zinc orthosilicate Zn₂SiO₄ containing doped titanium Ti as light emitting centers; the second inorganic insulation layer laminated on the blue-light emitting layer; and a back electrode laminated on the second insulation layer, in which thin film light emitting element, the zinc sulfide light emitting layer and the blue-light emitting layer being excited to emit light by electrons migrating, under voltage applied between the transparent electrode and the back electrode, through a boundary between the first insulation layer and the zinc sulfide light emitting layer and a boundary between the blue-light emitting layer and the second insulation layer.

The object of the present invention is achieved by an inorganic thin film light emitting element, which is comprised of a supporting means, further comprised of a glass base plate, for supporting the light emitting element; a transparent electrode laminated on the glass base plate; the first inorganic insulation layer laminated on the transparent electrode; a zinc sulfide light emitting layer, laminated on the first insulation layer, further comprised of doped light emitting centers; a blue-light emitting layer laminated on the zinc sulfide light emitting layer, further comprised of zinc orthosilicate Zn₂SiO₄ containing doped thulium Tm as light emitting centers; the second inorganic insulation layer laminated on the blue-light emitting layer;and a back electrode laminated on the second insulation layer, in which thin film light emitting element, the zinc sulfide light emitting layer and the blue-light emitting layer being excited to emit light by electrons migrating, under voltage applied between the transparent electrode and the back electrode, through a boundary between the first insulation layer and the zinc sulfide light emitting layer and a boundary between the blue-light emitting layer and the second insulation layer.

The object of the present invention is achieved by an inorganic thin film light emitting element, which is comprised of a supporting means, further comprised of a glass base plate, for supporting the light emitting element; a transparent electrode laminated on the glass base plate; the first inorganic insulation layer laminated on the transparent electrode; a zinc sulfide light emitting layer, laminated on the first insulation layer, further comprised of doped light emitting centers; a blue-light emitting layer laminated on the zinc sulfide light emitting layer, further comprised of zinc orthosilicate Zn₂SiO₄ containing doped cerium Ce as light emitting centers; the second inorganic insulation layer laminated on the blue-light emitting layer; and a back electrode laminated on the second insulation layer, in which thin film light emitting element, the zinc sulfide light emitting layer and the blue-light emitting layer being excited to emit light by electrons migrating, under voltage applied between the transparent electrode and the back electrode, through a boundary between the first insulation layer and the zinc sulfide light emitting layer and a boundary between the blue-light emitting layer and the second insulation layer.

The object of the present invention is achieved by an inorganic thin film light emitting element, which is comprised of a supporting means, further comprised of a glass base plate, for supporting the light emitting element; a transparent electrode laminated on the glass base plate; the first inorganic insulation layer laminated on the transparent electrode; a zinc sulfide light emitting layer, laminated on the first insulation layer, further comprised of doped light emitting centers; a blue-light emitting layer laminated on the zinc sulfide light emitting layer, further comprised of di-yttrium silicon pentoxide Y₂SiO₅ containing doped cerium Ce as light emitting centers; the second inorganic insulation layer laminated on the blue-light emitting layer; and a back electrode laminated on the second insulation layer, in which thin film light emitting element, the zinc sulfide light emitting layer and the blue-light emitting layer being excited to emit light by electrons migrating, under voltage applied between the transparent electrode and the back electrode, through a boundary between the first insulation layer and the zinc sulfide light emitting layer and a boundary between the blue-light emitting layer and the second insulation layer.

Rare earth elements such as Nd, Sm, Eu, Dy, Er, Ho, Yb, Pr, etc. are used as a dopant in the zinc sulfide light emitting layer.

### [Function]

The blue-light emitting layer, comprised of di-yttrium dioxide monosulfide Y₂O₂S containing doped thulium Tm as light emitting centers (Y₂O₂S:Tm), di-lanthanum dioxide monosulfide La₂O₂S containing doped thulium Tm as light emitting centers (2La₂O₃·La₂S₃:Tm), zinc orthosilicate Zn₂SiO₄ containing doped titanium Ti as light emitting centers (Zn₂SiO₄:Ti), zinc orthosilicate Zn₂SiO₄ containing doped thulium Tm as light emitting centers (Zn₂SiO₄:Tm), zinc orthosilicate Zn₂SiO₄ containing doped cerium Ce as light emitting centers (Zn₂SiO₄:Ce), or di-yttrium silicon pentoxide Y₂SiO₅ containing doped cerium Ce as light emitting centers (Y₂SiO₅:Ce), emits more bluish light.

Now the present invention will be described in detail hereinafter with accompanied drawing figures which illustrate the preferred embodiments of the present invention.

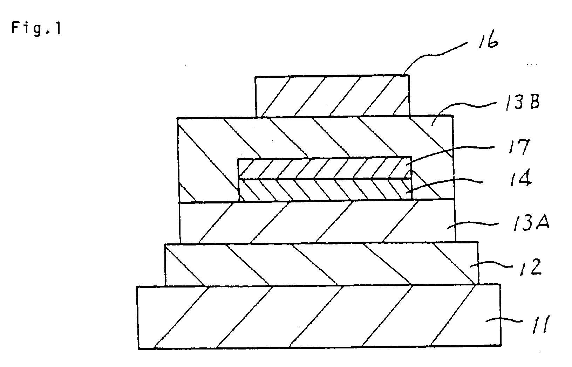

Figure 1 is a sectional view showing an embodiment of a thin film light emitting element according to the present invention. In Fig. 1, the same parts with those in Fig. 6 are designated by the same reference numerals. In Fig. 1, the blue-light emitting layer 15 of Fig. 6 is replaced by a blue-light emitting layer 17.

The thin film light emitting element of Fig. 1 is manufactured in the following way.

A transparent electrode ITO is deposited to a thickness of 170 nm by DC sputtering with electric power of 400 W from a target containing 90 wt% of indium oxide and 10 wt% of tin oxide in a gas mixture of argon and oxygen under 0,665 Pa (5 mTorr)

Each of the first and the second insulation layers of tantalum pentoxide Ta₂O₃ is grown to a thickness of 400 nm by RF sputtering with RF power of 1.5 kW from a tantalum metal target in a gas mixture of argon and oxygen under 0,665 Pa (5 mTorr).

The back electrode is deposited from an Al pellet at 200 °C by electron beam evaporation under applied voltage of 10 kV at a deposition rate of 1 nm/s to a thickness of 400 nm.

A zinc sulfide light emitting layer is deposited from a sintered pellet containing 0.5 wt% of Mn at 250 °C by electron beam evaporation under applied voltage of 10 kV at a deposition rate of 0,5 nm/s to a thickness of 600 nm.

Film growth conditions for the blue-light emitting layer is the same with those for the zinc sulfide light emitting layer except the pellet. The pellet for the growth of blue-light emitting layer is prepared by pressing powder sample of following composition under pressure of 180 kg/cm². The light emitting layers are grown to a thickness of 600 nm or 300 nm.

| | |
|---|---|
| Y₂O₂S:Tm | Thulium (Tm) concentration: 0.4 mol% |
| La₂O₂S:Tm | Thulium (Tm) concentration: 0.6 mol% |
| Zn₂SiO₄:Ti | Titanium (Ti) concentration: 0.5 mol% |
| Zn₂SiO₄:Tm | Thulium (Tm) concentration: 0.7 mol% |
| Zn₂SiO₄:Ce | Cerium (Ce) concentration: 0.2 mol% |
| Y₂SiO₅:Ce | Cerium (Ce) concentration: 0.2 mol% |

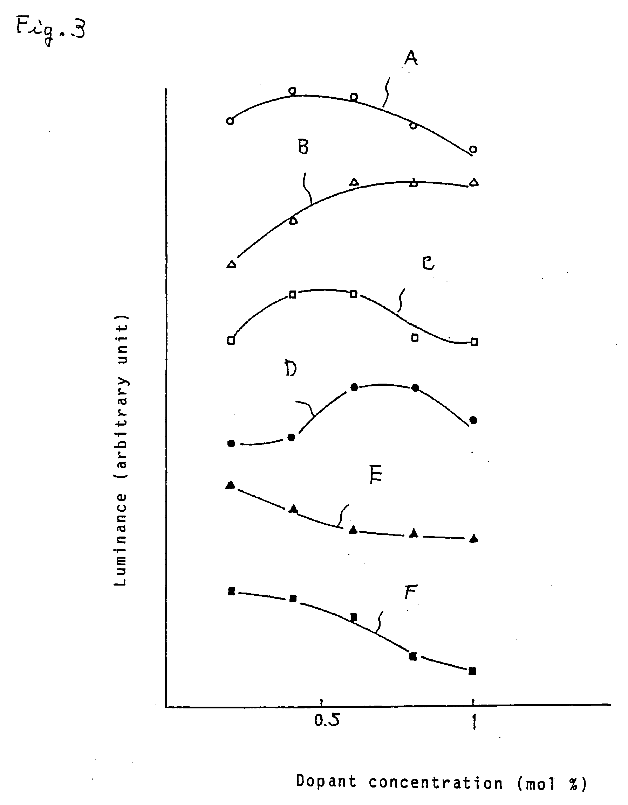

Figure 3 is a graph showing the relation between the luminance of emitted blue light and the dopant concentration in the blue-light emitting layer.

In Fig, 3, line A represents the property of Y₂O₂S:Tm; line B the property of La₂O₂S:Tm; line C the property of Zn₂SiO₄:Ti; line D the property of Zn₂SiO₄:Ti; line E Zn₂SiO₄:Ce; and line F the property of Y₂SiO₅:Ce.

In growing the blue-light emitting layer, each dopant concentration is selected at a concentration which gives the most intense blue light luminance.

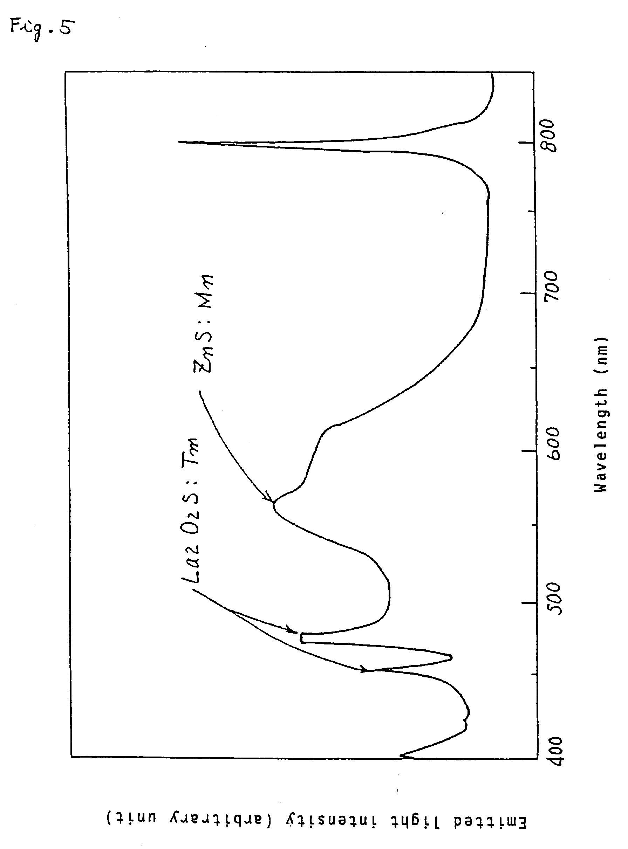

Figure 5 is a graph showing an emission spectrum of the thin film light emitting element, the blue-light emitting layer of which is comprised of La₂O₂S:Tm.

The emission spectrum of the zinc sulfide light emitting layer ZnS:Mn includes red and green components. The emission spectrum of the La₂O₂S:Tm blue-light emitting layer shows a peak at 450 nm as well as at 475 nm, and is rich in blue component.

For the sake of comparison, a light emitting element with a triple layer structure ZnS:Mn/SrS:Ce/ZnS:Mn has been prepared.

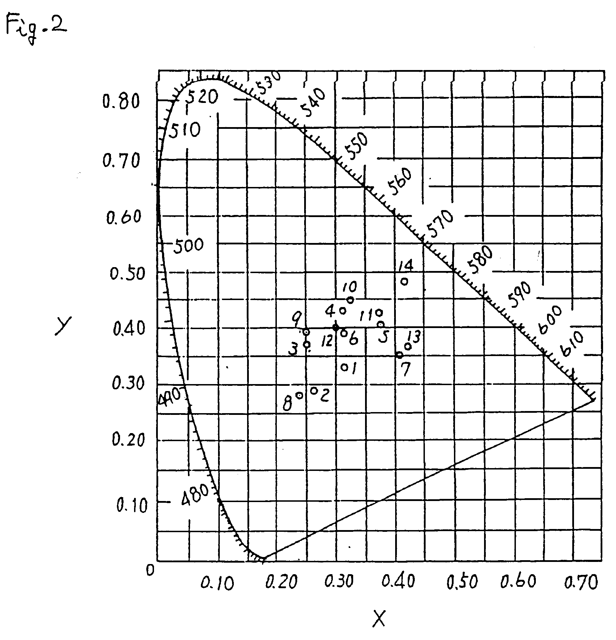

Figure 2 is a chromaticity diagram which compares the chromaticity coordinates of the embodiments of present invention with the chromaticity coordinates of the above described triple layer structure and a CRT.

The numerals 1 through 14 designate the elements, the light emitting layers of which and the layer thicknesses are listed below.
1 CRT
2 ZnS:Mn/Y₂O₂S:Tm (600 nm)
3 ZnS:Mn/La₂O₂S:Tm (600 nm)
4 ZnS:Mn/Zn₂SiO₄:Ti (600 nm)
5 ZnS:Mn/Zn₂SiO₄:Tm (600 nm)
6 ZnS:Mn/Zn₂SiO₄:Ce (600 nm)
7 ZnS:Mn/Y₂SiO₅:Ce (600 nm)
8 ZnS:Mn/Y₂O₂S:Tm (300 nm)
9 ZnS:Mn/La₂O₂S:Tm (300 nm)
10 ZnS:Mn/Zn₂SiO₄:Ti (300 nm)
11 ZnS:Mn/Zn₂SiO₄:Tm (300 nm)
12 ZnS:Mn/Zn₂SiO₄:Ce (300 nm)
13 ZnS:Mn/Y₂SiO₅:Ce (300 nm)
14 ZnS:Mn/SrS:Ce/ZnS:Mn (Specimen for comparison)

The chromaticity coordinate of the CRT shows the best color purity.

Thicker blue-light emitting layers emits purer white light due to their higher blue light emission intensity. Figure 2 indicates that the light emitting element of the present invention emits purer white light, near to the white light emitted from the CRT, than the specimen according to the prior art.

Though the present invention has been explained so far by way of example of the double light emitting layers, the present invention is applicable to a triple layer structure such as ZnS:Mn/blue-light emitting layer/ZnS:Mn or quadruple layer structure such as ZnS:Mn/Zn₂SiO₄:Ce/ZnS:Mn/Zn₂SiO₄ which emits white light.

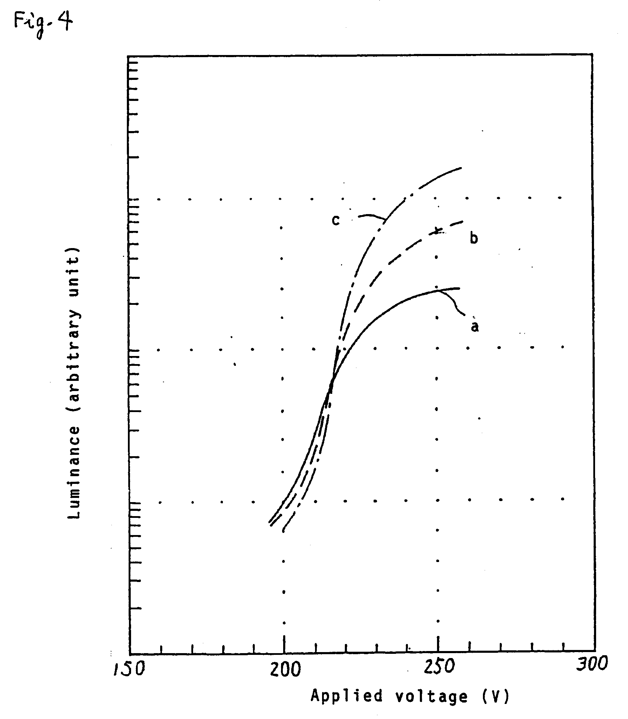

Figure 4 is a graph comparing the relations between applied voltage and luminance of a triple-light-emitting-layer element (b) and a quadruple-light-emitting-layer element (c) with that of a double light-emitting-layer element (a).

The double light-emitting-layer element (a) of Fig. 4 has a layer structure of ZnS:Mn(600nm)/Zn₂SiO₄:Ce(600nm); the triple-light-emitting-layer element (b) ZnS:Mn(300nm)/Zn₂SiO₄:Ce(600nm)/ZnS:Mn(300nm); and the quadruple-light-emitting-layer element (c) ZnS:Mn(300nm)/Zn₂SiO₄:Ce(300nm)/ZnS:Mn(300nm)/Zn₂SiO₄:Ce(300nm). The emitted light luminance is more improved with increasing number of layers.

### [Effect of the Invention]

The blue-light emitting layer, of the thin film light emitting element according to the present invention, which is comprised of, di-yttrium dioxide monosulfide Y₂O₂S containing doped thulium Tm as light emitting centers; di-lanthanum dioxide monosulfide La₂O₂S containing doped thulium Tm as light emitting centers; zinc orthosilicate Zn₂SiO₄ containing doped titanium Ti as light emitting centers; zinc orthosilicate Zn₂SiO₄ containing doped thulium Tm as light emitting centers; zinc orthosilicate Zn₂SiO₄ containing doped cerium Ce as light emitting centers; or di-yttrium silicon pentoxide Y₂SiO₅ containing doped cerium Ce as light emitting centers, emits more blue light than the light emitting layer of strontium sulfide and facilitates obtaining thin film light emitting elements which emit purer white light near to the white light emitted from the CRTs.

### [Brief Description of the Drawing Figures]

Figure 1 is a sectional view showing an embodiment of a thin film light emitting element according to the present invention;
Figure 2 is a chromaticity diagram comparing the chromaticity coordinates of the embodiments of present invention with the chromaticity coordinates of the conventional triple layer structure and a CRT;
Figure 3 is a graph showing the relation between the luminance of emitted blue light and the dopant concentration in the blue-light emitting layer;
Figure 4 is a graph comparing the relations between applied voltage and luminance of a triple-light-emitting-layer element (b) and a quadruple-light-emitting-layer element (c) with that of a double light-emitting-layer element (a);
Figure 5 is a graph showing an emission spectrum of the thin film light emitting element, the blue-light emitting layer of which is comprised of La₂O₂S:Tm;
Figure 6 shows a sectional view of a dual insulation type thin film light emitting element according to the prior art; and
Figure 7 is a graph showing an emission spectrum of a pair of zinc sulfide and strontium sulfide light emitting layers.

### [Assignment of Reference Numerals]

- 11: Glass base plate
- 12: Transparent electrode
- 13A: The first insulation layer
- 13B: The second insulation layer
- 14: Zinc sulfide light emitting layer
- 15: Strontium sulfide light emitting layer
- 16: Back electrode
- 17: Blue-light emitting layer

## Claims

1. A thin film light emitting element, including a glass base plate (11); a transparent electrode (12) laminated on said glass base plate; a first insulation layer (13A) laminated on said transparent electrode; a zinc sulfide light emitting layer (14), laminated on said first insulation layer, having doped light emitting centers; a blue-light emitting layer (17) laminated on said zinc sulfide light emitting layer, further comprising; a second insulation layer (13B) laminated on said blue-light emitting layer; and a back electrode (16) laminated on said second insulation layer, **characterized in that** said blue-light emitting layer (17) is comprised of an inorganic compound, selected from a group consisting of di-yttrium dioxide monosulfide Y₂O₂S, di-lanthanum dioxide monosulfide La₂O₂S, and zinc orthosilicate Zn₂SiO₄, having thulium Tm doped thereinto whereby to form light emitting centers, and said zinc sulfide light emitting layer (14) and said blue-light emitting layer (17) are excited to emit light by electron migration, under voltage applied between said transparent electrode (12) and said back electrode (16), through a boundary between said first insulation layer (13A) and said zinc sulfide light emitting layer (14) and a boundary between said blue-light emitting layer (17) and said second insulation layer.

2. A thin film light emitting element, including a glass base plate (11); a transparent electrode (12) laminated on said glass base plate; a first insulation layer (13A) laminated on said transparent electrode (12); a zinc sulfide light emitting layer (14), laminated on said first insulation layer (13A), having doped light emitting centers; a blue-light emitting layer (17) laminated on said zinc sulfide light emitting layer (14), further comprising; a second insulation layer (13B) laminated on said blue-light emitting layer (17); and a back electrode (16) laminated on said second insulation layer (13B), **characterized in that** said blue-light emitting layer (17) is comprised of Zn₂SiO₄, whereinto titanium Ti is doped thereby to form light emitting centers, and said zinc sulfide light emitting layer (14) and said blue-light emitting layer (17) are excited to emit light by electron migration, under voltage applied between said transparent electrode (12) and said back electrode (16), through a boundary between said first insulation layer (13A) and said zinc sulfide light emitting layer (14) and a boundary between said blue-light emitting layer (17) and said second insulation layer (13B).

3. A thin film light emitting element, including a glass base plate (11); a transparent electrode (12) laminated on said glass base plate; a first insulation layer (13A) laminated on said transparent electrode (12); a zinc sulfide light emitting layer (14), laminated on said first insulation layer (13A), having doped light emitting centers; a blue-light emitting layer (17) laminated on said zinc sulfide light emitting layer (14), further comprising; a second insulation layer (13B) laminated on said blue-light emitting layer (17); and a back electrode (16) laminated on said second insulation layer (13B), **characterized in that** said blue-light emitting layer (17) is comprised of an inorganic compound, selected from a group consisting of zinc orthosilicate Zn₂SiO₄ and di-yttrium silicon pentoxide Y₂SiO₅, whereinto cerium Ce is doped thereby to form light emitting centers, and said zinc sulfide light emitting layer (14) and said blue-light emitting layer (17) are excited to emit light by electron migration, under voltage applied between said transparent electrode (12) and said back electrode (16), through a boundary between said first insulation layer (13A) and said zinc sulfide light emitting layer (14) and a boundary between said blue-light emitting layer (17) and said second insulation layer (13B).
